(19) Europäisches Patentamt
European Patent Office
Office européen des brevets

(11) Publication number: 0 197 603
B1

(12) # EUROPEAN PATENT SPECIFICATION

(45) Date of publication of patent specification: 22.11.90

(51) Int. Cl.$^5$: G 11 B 15/665

(21) Application number: 86200547.7

(22) Date of filing: 02.04.86

(54) **Magnetic tape apparatus.**

(30) Priority: 09.04.85 NL 8501028

(43) Date of publication of application:
15.10.86 Bulletin 86/42

(45) Publication of the grant of the patent:
22.11.90 Bulletin 90/47

(84) Designated Contracting States:
CH DE FR GB IT LI NL

(56) References cited:
EP-A-0 057 921
WO-A-84/03790
FR-A-2 013 052
FR-A-2 380 616
FR-A-2 541 808
GB-A-2 000 894
NL-A-8 103 600
US-A-3 512 694
US-A-3 583 656
US-A-3 674 942

PATENTS ABSTRACTS OF JAPAN, vol. 6, no. 152 (P-134)1030r, 12th August 1982, page 5 P 134; & JP - A - 57 69 565

(73) Proprietor: N.V. Philips' Gloeilampenfabrieken
Groenewoudseweg 1
NL-5621 BA Eindhoven (NL)

(72) Inventor: Muller, Johannes Cornelius Antonius
c/o INT. OCTROOIBUREAU B.V. Prof. Holstlaan 6
NL-5656 AA Eindhoven (NL)

(74) Representative: Smit, Frederik Jan et al
INTERNATIONAAL OCTROOIBUREAU B.V. Prof. Holstlaan 6
NL-5656 AA Eindhoven (NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 197 603 B1

Courier Press, Leamington Spa, England.

**Description**

The invention relates to a magnetic-tape apparatus comprising a deck carrying a cylindrical drum assembly provided with at least one rotatable magnetic head, on which deck a sliding plate carrying at least two tape guides which are spaced from one another is guided for rectilinear movement towards and away from the drum assembly, the arrangement being such that when a tape cassette is positioned in or on the apparatus a movement of the sliding plate from an initial position towards the drum causes a part of the magnetic tape in the cassette to be led forwards the drum assembly after which movement, when the sliding plate is in an end position said part of the magnetic tape is wrapped around a part of the circumference of the drum assembly by said tape guides, the deck also carrying two winding spindles which are spaced from one another for respectively winding and unwinding the magnetic tape in the cassette.

A magnetic-tape apparatus of this kind is disclosed in United States Patent Specification 3,512,694. This known apparatus comrises a rectilinearly movable sliding plate which by means of the tape guides pulls part of the magnetic tape out of the cassette containing the amgnetic tape and subsequently wraps this part of the tape around part of the circumference of the drum assembly. This operation is usually referred to as "threading in" the magnetic tape. The reverse operation, during which the sliding plate moves back and the tape guides feed the magnetic tape back into the'cassette, is referred to as "threading out" the magnetic tape. The sliding plate of the known apparatus controls only these threading-out and threading-in operations. For controlling the other functions of the apparatus, such as pressing the roller against the capstan and switching the drive means, the known apparatus comprises a number of separate control elements. These elements render the known apparatus comparatively intricate and also less suitable for compact construction.

It is the object of the invention to provide a magnetic-tape apparatus of the kind specified in the opening paragraph, in which a large number of functions of the apparatus is controlled by means of the sliding plate.

To this end the invention is characterized in that the sliding plate is provided with positioning means which position the tape guides relative to the drum assembly in the end position of the sliding plate, first control means which control two pivotal arms which are arranged on the deck and which carry tape guides, second control means which control a pressure-roller lever which is arranged on the deck and which carries a pressure roller, and third control means which control an idler wheel for driving one of the winding spindles.

In the apparatus in accordance with the invention the sliding plate which carries the tape guides performs the threading-in and threading-out of the magnetic tape and in addition carries a plurality of parts which perform miscellaneous functions, and which may be integral with the sliding plate. These functions include the positioning of the tape guides in the end position of the sliding plate by the positioning means, the control of the pivotal arms with the tape guides by the first control means, the control of the pressure roller, arranged on the pressure-roller lever, by the second control means, and the control of the idler wheel for driving one of the winding spindles by the third control means. Thus, in the apparatus in accordance with the invention a compact and easily assembled control mechanism for the various functions of the apparatus can be obtained, whilst the possibility of forming the various parts in integrally with the sliding plate enables the number of adjustments to these parts to be minimized. Further, the various control means can be driven centrally by coupling the sliding plate to a motor. A great advantage of this is that the control of the functions of apparatus is now coupled directly to the position of the sliding plate carrying the tape guides. For example, during fast winding this ensures that the magnetic tape is always transported in a correct position relative to the drum assembly.

A preferred embodiment of the invention is characterized in that in the initial position the sliding plate is at least partly situated in the area between the two winding spindles and at its front side, which side faces the drum assembly, the sliding plate comprises a concavely curved wall the centre of curvature in the end position of the sliding plate lies substantially on the axis of the drum assembly. This location of the sliding plate in the area between the two winding spindles and the curved shape of the front side of the sliding plate ensure that this plate occupies a minimal space in the apparatus. As a result of this, the construction in accordance with the invention is suitable for use in apparatuses of compact construction.

In this respect another preferred embodiment of the invention is characterized in that a bearing means of a servo wheel is situated in the area between the two winding spindles, which servo wheel is elastically coupled to the sliding plate *via* a first spring coupling for moving the sliding plate. By mounting the bearing means for the servo wheel between the two winding spindles this wheel occupies little additional space and the presence of the first spring coupling enables the sliding plate to be urged into the end position, which is advantageous for a correct positioning of the tape guides by the positioning means.

In connection with the foregoing another preferred embodiment is characterized in that the servo wheel is elastically coupled to the pressure-roller lever *via* second spring coupling, which second spring coupling at least at the end of the movement of the sliding plate towards the end position exerts a force on the pressure-roller lever to press the pressure roller against a capstan of the apparatus. Thus, after the movement of the pressure-roller lever the servo wheel ensures that by means of the second spring coupling the pressure roller is pressed against the capstan with the appropriate force.

Another preferred embodiment of the invention is characterized in that the servo wheel has an aperture through which one of the winding spindles passes. By thus arranging the servo wheel with its aperture over the winding spindle a compact construction is obtained.

Another preferred embodiment of the invention is characterized in that the apparatus comprises a cassette holder for moving a cassette containing a magnetic tape towards and away from the winding spindles, and the sliding plate carries latching means which control a latching member for latching the cassette holder, the control of said latching means causing the cassette holder to be unlatched in the initial position of the sliding plate. This ensures that during the movement of the sliding plate away from and towards the end position and while the end position is maintained the sliding plate keeps the cassette holder latched by controlling the latching means so that the cassette cannot be removed from the apparatus. The cassette holder is unlatched only in the initial position of the sliding plate to allow the cassette to be removed.

Another preferred embodiment of the invention is characterized in that the tape guides, the positioning means, the first control means, the second control means, the third control means, the latching means and the brake means are constructed to form an integrated unit with the sliding plate. In this way a large number of parts are integral with the sliding plate, which parts assist in controlling the various functions of the apparatus. These parts together with the sliding plate are preferably made of a thermosetting plastics, the positions of these parts relative to each other being defined by the injection-moulding die.

Another preferred embodiment of the invention is characterized in that the sliding plate carries friction means which are pressed against one of the winding spindles in the end position of the sliding plate. Thus, through the friction means the sliding plate can also exert a counter-torque on the winding spindle which is not being driven. This may be advantageous for keeping the magnetic tape taut.

In this respect a further preferred embodiment is characterized in that the sliding plate can be positioned in a first or a second fast-wind position between the initial position and the end position, in which respective fast-wind positions the sliding plate is situated at different distances from the drum assembly, and the friction means comprise two felt elements which are attached to the sliding plate, the respective felt element being pressed against one winding spindle or the other in the first fast-wind position and the second fast-wind position respectively. In this way a counter-torque is exerted in the first or the second fast-wind position on the winding spindle which is not being driven. As in the respectively fast-wind positions the sliding plate occupies different positions relative to the drum assembly the respective felt element can simply be pressed in position without the use of special control means.

A magnetic-tape apparatus embodying the invention will now be described in more detail, by way of example, with reference to the accompanying drawings. In the drawings:

Fig. 1 is a perspective view of a magnetic-tape apparatus in accordance with the invention, in which the magnetic tape is shown schematically for the sake of clarity and in which the apparatus is in the stop condition;

Fig. 2 is a plan view drawn to another scale, showing the apparatus of Fig. 1 in the stop condition;

Fig. 3 is an underneath view drawn to another scale, showing the apparatus of Fig. 1 in the stop condition;

Fig. 4 is a plan view similar to Fig. 2, showing the apparatus in a fast-wind condition;

Fig. 5 is an underneath view similar to Fig. 3, showing the apparatus in the same fast-wind condition as in Fig. 4;

Fig. 6 is a perspective view similar to Fig. 1, showing the magnetic-tape apparatus in the normal operating condition;

Fig. 7 is a plan view similar to Fig. 2 and 4 but showing the apparatus in the normal operating condition;

Fig. 8 is an underneath view similar to Fig. 3 and 5 but showing the apparatus in the normal operating condition;

Fig. 9 is a sectional view taken on the lines IX—IX in Fig. 7 and showing part of the lower drum of the drum assembly in outside elevation;

Fig. 10 is a schematic plan view drawn to another scale, showing part of the apparatus of Fig. 1 in the normal operating condition but showing the drum assembly and the tape guides in positions other than those shown in Fig. 1;

Fig. 11 is a schematic view looking in the direction of the arrow XI in Fig. 10;

Fig. 12 is a schematic view looking in the direction of the arrow XII in Fig. 10.

The magnetic-tape apparatus shown in Fig. 1 has a deck 1 which comprises a comparatively rigid deck plate 2 at the upper side of the apparatus. The deck plate 2 carries a cylindrical drum assembly 3, which comprises two non-rotatable coaxial drum sections constituted by a lower drum 4 and an upper drum 5 (see also Figs. 10 and 11). A head disk 6 is mounted for rotation between the lower drum and the upper drum and carries a plurality of, for example, four (see Fig. 10), magnetic heads 7. The axis of the lower drum 4 and the upper drum 5 coincides with the axis of rotation 6a of the head disk 6. The axis of rotation 6a is inclined relative to the deck plate 2. The head disk 6 is driven by means of a motor 8, which is arranged beside the drum assembly 3 and whose shaft 8a is connected to a pulley 9 underneath the deck plate 2. The axis of the motor shaft 8a extends parallel to the axis of rotation 6a. A belt 10 passes round the pulley 9 and round another pulley 11 which is fixedly connected to the shaft of the head disk 6. The normal direction of rotation of the head disk 6 is as indicated by the arrow A.

It is to be noted that alternatively the upper drum 5 may carry the magnetic heads 7 and may be rotatable about the axis of rotation 6a. In that case the head disk 6 may be dispensed with.

Two spaced winding spindles 12 and 13 project above the deck plate 2. In the plan view of Fig. 2 the spindles are situated substantially at the base verticles of an isosceles triangle whose apex is defined by the axis of rotation 6a. The winding spindles 12 and 13 are mounted for rotation on journals which are secured to the deck plate 2. The winding spindle 12 is connected to a fastwind toothed idler 14 wheel and the spindle 13 to a fast-wind toothed ideler wheel 15a and a normal-mode idler toothed 15b. The normal-mode idler wheel 15b is connected to the winding spindle 13 by means of a friction clutch in the customary manner. It is to be noted that the idler wheel 14 is coaxial with the winding spindle 12 and the idler wheels 15a and 15b are coaxial with the winding spindle 13 and that the axes of the idler wheels and the spindles extend perpendicularly to the major surface of the deck plate 2. This applies also to the axis of rotation of a capstan 16 which projects from the deck plate 2. The capstan 16 is journalled in a bearing bush 17 on the deck plate 2 and underneath the deck plate 2 it is rigidly connected to a flywheel 18 and to a gear wheel 19 (Fig. 3). For driving the capstan 16 a drive motor 20 is arranged beside the drum assembles 3 and comprises a motor shaft 20a carrying a pulley 21 and a gear wheel 22 underneath the deck plate 2. The gear wheel 22 drives the capstan 16 *via* an idler wheel 23 in the direction indicated by the arrow B.

A belt 2 passes round the pulley 21 and a pulley 25. The pulley 25 is rigidly connected to a gear wheel 26. The pulley 25 and the gear wheel 26 are mounted on a journal 27 which is secured to a coupling plate 28 which is pivotable relative to the deck plate 2 about a spindle 29. Further, a gear wheel 30, which meshes with the gear wheel 26, is journalled in the coupling plate 28.

The upper surface of the deck plate 2 carries a supporting member 31 in the form of a sliding plate which viewed in the plan view of Fig. 2, is rectilinearly slidable in a direction perpendicular to a connecting line *v* between the axes of rotation of the winding spindles 12 and 13 and which for this purpose is guided in a slot 2a in the deck plate 2, the longitudinal axis 2aa of the slot extending perpendicularly to said connecting line *v*. A pin 28a which is rigidly connected to the coupling plate 28 extends through the slot 2a and is guided in a groove 31a in the lower side of the sliding plate 31. As is shown in Fig. 3, this groove has a special shape and serves as a control means for controlling the coupling plate 28 during the movement of the sliding plate 31 away from or towards the drum assembly 3. As is shown in Figs. 3, 5 and 8 the pin 28a may be situated in a section 31aa of the groove 31a (Fig. 3), in a section 31ab (Fig. 5) or in a section 31ac (Fig. 8). All three of these sections extend parallel to the longitudinal axis 2aa of the slot 2a, the axis of the section 31ab being situated to the left of the spindle 29 as viewed in Fig. 3, the axis of the section 31ac being situated to the right of the spindle 29, and the axis of the section 31aa being situated slightly further to the right of the spindle 29 than the section 31ac. An oblique section 31ad extends between the sections 31aa and 31ab and an oblique section 31ae extends between the sections 31ab and 31ac. In the stop position of the apparatus as shown in Fig. 3 the pin 29a is situated in the right-most section 31aa, so that the coupling plate 28 is in a position such that the gear wheel 26 meshes with the fast-wind idler wheel 15a. By moving the sliding plate 31 over a comparatively short distance towards the drum assembly 3 the gear wheel 26 remains in mesh with the fast-wind idler wheel 15a and by moving the sliding plate 31 slightly further towards the drum assembly the pin 28a enters the groove section 31ab, as a result of which the coupling plate 28 is pivoted about the spindle 29 into the position shown in Fig. 5, in which the gear wheel 30 meshes with the fast-wind idler wheel. In this position the gear wheel 26 has become disengaged from the fast-wind idler wheel 15a as a result of the pivotal movement of the coupling plate 28. By a final movement of the pin 28a in the groove section 31ac the coupling plate 28 can be moved into a position in which both the gear wheel 26 and the gear wheel 30 are disengaged from the idler wheels 14 and 15a (Fig. 8). It is noted that the slot 2a is wide enough to allow the pin 28a to move between the section 31ab and the sections 31aa and 31ac of the groove in the plate 31.

A pressure-roller lever 32 is pivotable about a pivot 33 on the upper side of the deck plate 2. The pressure-roller lever 32 is constructed as a two-armed lever and at the free end of one of its arms it carries a pressure roller 34. The other arm of the lever 32 carries a pin 35 at its free end, which pin is movable in a slot 2b in the deckplate 2 (Fig. 2). As is shown in Fig. 3 the pin 35 carries a gear wheel 36 underneath the deck plate 2 (Fig. 3) and the pin is mounted on the end portion of an arm 37. The other end of the arm 37 carries a journal 38, by means of which the arm 37 is pivotable relative to the deck plate 2. A gear wheel 39 is rotatable about the journal 38 and meshes with the gear wheel 36 and also with the gear wheel 19. When the pressure-roller 32 is pivoted the arm 37 is also pivoted *via* the pin 35, the arm 37 being pivotable from a position shown in Fig. 3 to a position shown in Fig. 8, in which the gear wheel 36 meshes with the normal-mode idler 15b. Thus, the motor 20 can drive the fast-wind idler wheel 14, the fast-wind idler wheel 15a or the normal-mode idler wheel 15b.

Near its front side which faces the drum assembly, 3 the sliding plate 31 is connected to a first spring coupling 40 comprising a spring, for example, a blade spring, which is connected at one end to the sliding plate 31 and at the other end to a toothed servo wheel 41 which is mounted on a journal 42 which is mounted for rotation in the deck plate 2. The servo wheel 41 is situated above the sliding plate 31. By means of the first spring coupling 40, which is connected eccentrically to the servo wheel, the latter acts in the manner of a crank on the sliding plate 31 to move the plate from an initial position shown in Figs. 1 and 2 to one or the other of two fast-wind positions (of which one fast-wind position is shown in Fig. 4) and also to an end position, shown in Figs. 6, 7 and 9 to 12, which position corresponds to the normal operating condition of the apparatus. The servo wheel 41 has a uniform aperture 41a through which the winding spindle 12 passes. This arrangement allows the greater part of the servo wheel 41, which has a comparatively large diameter, to be situated between the winding spindles 12 and 13. The servo wheel 41 meshes with a gear wheel 43, which carries a switching pin 44 which actuates a reset switch 45 in the stop position shown in Fig. 2. In the operating position shown in Fig. 7 the switching pin 44 actuates a reset switch 46. In a manner not shown the switches 45 and 46 are electrically connected to an electronic circuit, which also actuates an electromagnet 47 (see Fig. 3). The armature of the electromagnet 47 is connected to a switching rod 48, whose end which is remote from the electromagnet is connected to a journal 49 on which a toothed wheel 50 is journalled. Also connected to the journal 49 is a tension spring 51, which is arranged in line with the switching rod 48 and which, viewed in Fig. 3, tends to pull the wheel 50 towards the bottom left. In the stop condition of the apparatus the circumference of the wheel 50 abuts an abutment wall 52 on the underside of the deck plate 2. When, upon switching on the apparatus the electromagnet 47 is energized *via* the electronic circuit the wheel 50 is moved towards the top right viewed in Fig. 3 against the force of the spring 51, so that a driving connection is established between the shaft of the pulley 11 and a gear wheel 53 with which the wheel 50 meshes. The gear wheel 53 is rigidly and coaxially connected to a comparatively small gear wheel 54, which meshes with a gear wheel 55. In turn the gear wheel 55 meshes with a gear wheel 56 which is fixedly connected to the gear wheel 43. Thus, when the electromagnet 47 is energized, a transmission is established between the shaft 8a of the motor 8 and the servo wheel 41. By means of this transmission the sliding plate 31 can be shifted from the initial position to the respective fast-wind positions and to the end position, and by reversing the direction of rotation of the motor 8 so that it rotates in the opposite direction to that indicated by the arrow A the sliding plate can be moved back. In the end position the switching pin 44 abuts against the reset switch 46 and (as stated previously) in the initial position the pin abuts against the reset switch 45. The position of the gear wheel 53 is detected by means of a position-detection means comprising a counter 57. The counter may comprise a photocell but alternatively it may comprise a Hall element. By coupling it to the electronic circuit the counter can thus establish over which distance the sliding plate 31 has been shifted towards the drum assembly after starting from the position shown in Fig. 2. This is important in particular for the fast-wind positions, of which one position is shown in Fig. 4. By constructing the electronic circuit as a microprocessor the initial position and the end position of the sliding plate 31 can be detected accurately by means of the reset switches 45 and 46.

Above the sliding plate 31 the journal 42 supports a bell-crank lever 58 (see Fig. 2) having a first end 58a which in the initial position of the sliding plate is pressed against a second spring coupling of the apparatus comprising a wire spring 59. The lever 58 is carried by the servo wheel 41 for rotation therewith, and as a result of the rotation of the servo wheel 41 a second end 58b of the bell-crank lever 58 acts against the wire spring 59, so that the wire spring exerts a force on the pressure-roller lever 32 to urge the pressure roller 34 against the capstan 16 with spring force in the position shown in Fig. 7.

In the upper side of the sliding plate 31 a V-shaped groove 60 is formed, whose walls constitute control means for a pin 61 arranged on the pressure-roller lever 32. When the sliding plate 31 is shifted from the initial position to the end position, *i.e.* from the position shown in Fig. 2 to that shown in Fig. 7, the pressure-roller lever 32 passes through the position shown in Fig. 4, in which the pin 61 is situated in the vertex of the V-shaped groove 60. Thus, the groove 60 provides an automatic guidance of the pressure-roller lever 32, with the pressure roller 34, towards the capstan 16. As a result of the coupling between the pressure-roller lever 32 and the arm 37 *via* the pin 35, the guidance provided by the groove 60 during the movement of the sliding plate 31 also causes the gear wheel 36 to be brought into the position shown in Fig. 8.

The deck plate 2 further carries two levers 62 and 63 mounted for pivotal movement relative to the deck plate, the left-hand lever 62 in Fig. 2 being pivotable about a pivot 64 and the righthand lever 64, together with the pressure-roller lever 32, being pivotable about the pivot 33. The two levers 62 and 63 are mirror-symmetrical relative to a plane of symmetry *a* which lies midway between and is parallel with the axes of the winding spindles 12 and 13 (see Fig. 7) and which contains the longitudinal axis 2aa of the slot 2a. On opposite sides of its pivotal axis each lever comprises two arms 62a, 62b and 63a, 63b. At the free ends of the arms 62b and 63b respectively, the levers carry tape guides 65 and 66 respectively, which are each provided with a cylindrical guide surface. At their free ends the arms 62a and 63a of the levers carry pins 67 and 68 respectively. The sliding plate 31 is provided with control means comprising guide surfaces 69 and 70 respectively which are situated on the side walls of the sliding plate 31 and are mirror-symmetrical relative to the plane of symmetry *a*. As is shown in Fig. 2, the guide surfaces 69 and 70 have cylindrically concavely curved portions 69a and 70a respectively at their ends which are nearer the drum assembly 3. In the positions of the levers 62 and 63 shown in Fig. 2 (the stop condition of the apparatus) the pins 67 and 68 respectively bear against the surface portions 69a and 70 respectively and thus occupy stable positions. Adjoining the portions 69a and 70a the guide surfaces 69 and 70 have portions 69b and 70b respectively, against which the pins 67 and 68 bear in the position illustrated in Fig. 4, which corresponds to a fast-wind condition of the apparatus. The surface portions 69b and 70b each comprise a straight guide portion, and adjacent the straight portion the guide surfaces 69 and 70 each have a concavely curved end portion 69c and 70c respectively. These end portions together with the adjacent parts of the straight guide portions are situated on projecting limbs of the sliding plate 31, which limbs have such dimensions that the curved end portions 69c and 70c are elastically deflexible to a small extent. As is illustrated in Fig. 7 the end portions 69c and 70c of the guide surfaces 69 and 70 ensure a stable positioning of the guides 65 and 66 respectively in the operating position of the apparatus.

The hereafter described construction of the positioning means is disclosed and described in the non-prepublished European patent application No. 0 197 602 (PHN 11.350 herewith incorporated by reference).

In the position illustrated in Fig. 2 a rear portion 31b of the sliding plate 31 is situated in the area between the two winding spindles 12 and 13. At its front side facing the drum assembly 3 the sliding plate further has a concavely curved wall 31c whose centre of curvature in the end position of the sliding plate (Fig. 7) lies substantially on the axis of the drum assembly. This wall extends through an arc of approximately 90° and on it, near the ends thereof, are positioning means in the form of two projections 31d arranged mirror-symmetrically relative to the plane of symmetry *a*. At its ends the wall 31c adjoins two front portions 31e of the sliding plate which are disposed mirror-symmetrically relative to the plane of symmetry *a*. As is also shown in Fig. 1, these front portions 31e each carry two tape guides 73, 74 and 75, 76 which are rigidly connected to said front portions of the sliding plate by base portions 71 and 72 respectively of the tape guides. Each tape guide has a cylindrical circumferential surface, the axes of the tape guides 73 and 76 extending substantially perpendicularly to the deck plate 2 and the axes of the tape guides 74 and 75 extending substantially parallel to the axis of rotation 6a of the head disk 6.

In the lower drum 4 of the drum assembly 3 there is provided a positioning element constituted by a recess in the outer wall of the lower drum 4. In the present embodiment the recess is a circumferential groove 77 in the outer wall, the groove extending in a plane perpendicular to the axis of the drum assembly. As an alternative, separate local recesses may be formed in the outer wall of the lower drum 4. The advantage of the groove is that it can be formed easily and accurately in the outer wall of the lower drum 4. In the normal operating condition of the apparatus, in which the sliding plate 31 is in the end position (Fig. 7), the projections 31d engage the wall of the groove 77 (see Fig. 9), so that a correct positioning of the tape guides relative to the drum assembly 3 is ensured as a result of the rigid connection between the projections 31d and the tape guides 73 to 76. The wire spring 40 ensures that the projections portions 31d are pressed firmly into the groove 77. It is to be noted that in the embodiment shown in Figs. 1—9 the projections 31d are situated at different levels relative to the deck plate 2 as a result of the arrangement of the groove 77 in a plane perpendicular to the axis of the drum assembly 3 (see Fig. 9). If as alternative positioning elements two local recesses are formed in the outer wall of lower drum 4 at the same level the projections 31d may also be situated at the same level.

At its rear side which is remote from the drum assembly 3 the portion 31b of the sliding plate 31 may carry an adjusting element 78 comprising a set-screw whose axis is preferably situated in the plane of symmetry *a* (see Fig. 9). By adjusting the set-screw 78 the positions of the various tape guides can be influenced because the projections 31d can be tilted in the groove 77 about the connecting line *b* between the two projections 31d by tightening or loosening said screw. The projections 31d and the groove 77 are conical shaped in a cross-section taken in a plane containing the axis of the drum assembly for a smooth engagement between the walls of the projections and those of the groove (see Fig. 9). Suitably, the sliding plate 31 is formed as an integral unit together with the projections 31d and the tape guides 73, 74 75 and 76, this unit being preferably made of a thermosetting plastics. This has the advantage that the mould used for the manufacture of this unit accurately defines the various dimensions. Thus, tolerances of the various parts of the sliding plate are minimized.

The rear portion 31b of the sliding plate comprises a latching wall 31f, which actuates a latching member 79 which latches a cassette holder 80 arranged above the deck plate 2. Only a part of this cassette holder 80 is shown in Fig. 1. The latching member 79 is pivotably connected to the deck plate and is urged against the latching wall 31f by a tension spring 79 in the stop condition of the apparatus. In this position of the latching member 79 the cassette holder 80 is not latched. A magnetic tape cassette, not shown, can then be inserted into the holder 80, after which the holder is moved downwards to move the cassette with the tape reels 81 and 82 towards the deck plate 2 until the reels 81 and 82 are engaged by the winding spindles 12 and 13 respectively. For an example of such a cassette holder and the lifting device cooperating therewith reference is made to the Applicants' EP—A—0128629 (PHN 10.702, herewith incorporated by reference). Alternatively, the holder 80 may be constructed as a holder which is pivotably connected to the deck 1. By sliding the sliding plate towards the end position the latching member 79 is pivoted under the influence of the spring 79a, thereby latching the cassette holder. Thus, the sliding plate also assists in latching and unlatching the cassette holder.

As shown in Fig. 3, the lower surface of the sliding plate carries brake means 83 comprising a member extending through the slot 2a and with two pointed end portions 83a which engage with the teeth of the fast-wind idler wheels 14 and 15a in the stop position of the sliding plate. In this way the winding spindles 12 and 13 are locked in the stop position. By moving the sliding plate towards the drum assembly 3 the brake means 83 are disengaged from the fast-wind idler wheels, so that these wheels can be driven without obstruction.

Instead of being inclined the axis of the drum assembly 3 and the axis of rotation 6a of the head disk 6 may extend perpendicularly to the deck plate 2. This alternative is illustrated in Figs. 10—12. The tape guides 74 and 75 also would then occupy perpendicular positions and the tape guides 73 and 76 would be inclined. With corresponding inclined positions of the tape guides 65 and 66 and the magnetic-tape cassette, the path of the magnetic tape 84 around the drum assembly 3 would then be similar to the situation illustrated in Figs. 1—9. An advantage of this alternative construction is that the projections 31d of the sliding plate 31 can be situated at the same level relative to the deck plate 2.

Before the magnetic-tape apparatus in accordance with the invention can be put into use a magnetic-tape cassette with tape reels 81 and 82 has to be brought into engagement with the winding spindles 12 and 13 by means of the cassette holder. The magnetic-tape cassette used here is, for example, of the kind disclosed and described in the Applicant's non-prepublished European Patent Application No. 85 200 477.9 with the publication number 162 487 (PHN. 11.000, herewith incorporated by reference). The cassette is lowered into position on spring-loaded locating pins 85, two of which are shown in Fig. 1. The magnetic tape 84 wound on the reels 81 and 82 extends round tape guides 88 in the cassette which are shown schematically in Figs. 1 and 2. When the magnetic-tape cassette is in position the tape guides 65 and 66, the pressure roller 34, and the tape guides 73, 74, 75 and 76 are separated from the drum assembly 3 by the front part of the magnetic tape 84. This is possible because the cassette housing is constructed so that space is available in the housing to receive said components. In this respect it is important that as a result of the action of the first control means 69, 70 the tape guides 65 and 66 occupy the correct positions and also that as a result of the action of the second control means 60 the pressure-roller lever is pressed against a stop 86 (Fig. 1) and thereby keeps the pressure roller 34 positioned correctly. In this stop position the magnetic tape is clear of the pressure roller 34, the tape guides 65, 66 and the tape guides 73 to 76.

When the apparatus is switched on the motor 8 is started, causing the head disk 6 to rotate in the direction indicated by the arrow A. If the electromagnet 47 is no energized this has the result that in the manner described above the servo-wheel 41 begins to rotate in the direction indicated by the arrow C in Fig. 1, causing the brake means 83 to become disengaged from the fast-wind idler wheels 14 and 15a, the cassette holder 80 to be latched, the pin 28a on the coupling plate 25 to be guided in the section 31aa of the groove 31a in the sliding plate 31 and to remain in this section for the time being, and the levers 62 and 63 to be pivoted by means of the guide surface 69 and 70 respectively, so that the magnetic tape 84 is lifted off the guides 88 in the cassette by the tape guides 65 and 66 but still remains clear of the drum assembly 3 and, as the pin 61 on the pressure-roller lever 32 traverses the first branch of the V-shaped groove 60, the pressure-roller lever remains in its initial position against the stop 86. Depending on the selected actuating button of the apparatus the sliding plate 31 is now moved into a position in which the pin 28a is still situated in the groove section 31aa or the sliding plate 31 is moved slightly further into the position shown in Figs. 4 and 5, in which the pin 28a is situated in the groove section 31ab. In the first fast-wind position the gear wheel 26 on the coupling plate 28 meshes with the fast-wind idler wheel 15a as shown in Fig. 3, whilst in the second fast-wind position the gear wheel 30 on the coupling plate meshes with the fast-wind idler wheel 14. Thus, in the first fast-wind position the magnetic tape 84 is wound rapidly onto the tape reel 82 on the winding spindle 13 and in the second fast-wind position shown in Figs. 4 and 5 it is wound onto the tape reel 81 on the winding spindle 12. Fast winding is achieved in that at the end of the movement of the sliding plate 31, when the energization of the electromagnet 47 and consequently the rotation of the servo wheel 41 have stopped, the drive motor 20 is started, causing the pulley 21 to rotate in the direction indicated by the arrow D. This rotation causes the capstan 16 to rotate in the direction indicated by the arrow B, but in this position, as stated previously, the magnetic tape is clear of the pressure roller 34 and the capstan 16. For fast winding it is important that as a result of the shape of the cassette housing the magnetic tape 84 between the reels 81 and 82 is not in contact with any parts of the cassette housing (such as the guides 88). During fast winding the tape path is influenced only by the tape guides 65 and 66. The correct position of the sliding plate 31 for fast winding in either direction is determined by the position-detection means 57 which cooperates with the gear wheel 53. However, it is to be noted that this position can also be detected in other ways, for example, by means of wiper contacts which directly detect the position on the sliding plate 31.

If as a result of the energization of the electromagnet 47 the sliding plate 31 is moved from the initial position into the end position as shown in Figs. 6 to 12, the V-shaped groove 60 causes the pressure-roller lever 32 to be pivoted to the end position, and under the influence of the spring 59 the pressure roller 34 is pressed against the capstan 16 (see Fig. 7). During this pivotal movement of the lever 32 the arm 37 is pivoted by the pin 35 so that the gear wheel 36 meshes with the normal-mode idler wheel 15b and the tape is wound onto the reel 82 on the winding spindle 13 *via* the winding friction, not shown. When the sliding plate 31 is moved to the end position it is important that the magnetic tape 84, which has initially been led out of the cassette housing by the guides 65 and 66, is now further guided by the tape guides 73 and 76 and is wrapped around the drum assembly 3 through an angle of approximately 90°. This operation is referred to as "threading-in" the magnetic tape. At the end of the movement the tape guides 74 and 75 play an important part in this operation. As a result of the inclination of the axis of rotation 6a of the head disk 6 and of the axis of the drum assembly the tape is now wrapped around the wall of the drum assembly along a helical path. This enables oblique tracks to be recorded on or to be read from the magnetic tape 84 by means of the magnetic heads 7 as the head disk 6 rotates. If the tape is thus wrapped around the drum assembly 3 it is important that the tape guides 73 to 76 are aligned accurately relative to the drum assembly. This is achieved by means of the projections portions 31d in conjunction with the groove 77 in the lower drum 4. This provides a very accurate yet easily obtained positioning of said projections.

In this respect it is important that the portions 31d and the groove 77 are conical-shaped, so that during the engagement of these portions with the groove wall they are automatically aligned correctly relative to each other (see Fig. 9). In addition, the tape may be corrected by means of the set screw 78, but if accurately manufactured parts, for example injection-moulded parts, are employed this adjustment may be omitted. The end position of the servo wheel 41 is defined by the switching pin 44 on the gear wheel 43 actuating the reset switch 46. In this end position the servo wheel 41 presses the projections 31d firmly into the groove 77 *via* the spring 40, and the spring 59 exert a pressure on the pressure-roller lever 32 such that the pressure roller 34 is pressed against the capstan 16 with a predetermined force. At this instant the apparatus is in the normal operating condition and signals can be recorded on or read from the tape.

The sliding plate 31 may also carry a resilient arm 89 (Fig. 7) which is provided with friction means comprising two mutually spaced felt elements 90a and 90b, which can each be pressed against the winding spindle 12 in order to exert a countertorque on the winding spindle 12 to keep the tape taut when the magnetic tape 84 is unwound. In the first fast-wind position the felt element 90a is pressed against the winding spindle 12 and in the normal operating position the felt element 90b is pressed against this spindle. The position of the felt element 90a relative to the sliding plate 31 is such that the in second fast-wind position, when the tape is taken up by means of the winding spindle 12, this felt element 90a is clear of the winding spindle. In the second fast-wind position only a felt element 91 arranged on a resilient arm 92 on the sliding plate 31 is pressed against the winding spindle 13 to exert a counter-torque on this winding spindle. This selective application of the felt elements is possible by moving the sliding plate 31 to the various positions.

In addition to the correct positioning of the tape guides 73 to 76 relative to the drum assembly 3 the magnetic-tape apparatus in accordance with the invention has the advantage that the sliding plate 31 can be formed integrally with various parts required for controlling the various apparatus functions. As described hereinbefore, the sliding plate 31 is formed integrally with means for controlling the drive of the winding spindles, means for controlling the pressure-roller lever, means for controlling pivotal arms carrying tape guides, means for controlling the brake means, means for controlling a latching means for the cassette holder, and means for automatically positioning the tape guides. Further, the sliding plate 31 may carry the friction means for exerting a counter-torque on the respective winding spindle. A great advantage of this is that the control logic of the apparatus is locked directly to the position of the sliding plate 31. Thus, in each position of the sliding plate the tape guides occupy positions which correspond accurately to the selected apparatus function. This makes the magnetic-tape apparatus in accordance with the invention suitable for many uses and renders the apparatus very suitable for mass-production. One possible use in the recording and/or reproduction of digital audio signals, for which a compact magnetic-tape apparatus is desirable.

It is to be noted that alternatively the servo wheel 41 may be driven by a separate motor, in which case the electromagnet 47 and the wheel 50 and the wheels driven thereby may be dispensed with. This separate motor is switched on and off and, if desired, its direction of rotation reversed, by the electronic circuit.

**Claims**

1. A magnetic-tape apparatus comprising a deck (1) carrying a cylindrical drum assembly (3) provided with at least one rotatable magnetic head (7), on which deck a sliding plate (31) carrying at least two tape guides (73 to 76) which are spaced from one another is guided for rectilinear movement towards and away from the drum assembly, the arrangement being such that when a tape cassette is positioned in or on the apparatus, a movement of the sliding plate (31) from an initial position towards the drum assembly (3) causes a part of the magnetic tape (84) in the cassette to be led towards the drum assembly, after which movement, when the sliding plate is in an end position, said part of the magnetic tape is wrapped around a part of the circumference of the drum assembly (3) by said tape guides the deck (1) also carrying two winding spindles (12, 13) which are spaced from one another for respectively winding and unwinding the magnetic tape (84) in the cassette, characterized in that the sliding plate (31) is provided with

positioning means (31d) which position the tape guides (73 to 76) relative to the drum assembly (3) in the end position of the sliding plate,

first control means (69, 70) which control two pivotal arms (62b, 63b) which are arranged on the deck and which carry tape guides (65, 66),

second control means (60) which control a pressure-roller lever (32) which is arranged on the deck (1) and which carries a pressure roller (34), and

third means (31a) which control an idler wheel (26) for driving one of the winding spindles (12, 13).

2. A magnetic-tape apparatus as claimed in Claim 1, characterized in that in the initial position the sliding plate (31) is at least partly situated in the area between the two winding spindles (12, 13) and at its front side, which side faces the drum assembly (3), the sliding plate comprises a concavely curved wall (31c) whose centre of curvature in the end position of the sliding plate lies substantially on the axis of the drum assembly.

3. A magnetic-tape apparatus as claimed in Claim 2, characterized in that a bearing means of a servo wheel (41) is situated in the area between the two winding spindles (12, 13), which servo wheel is elastically coupled to the sliding plate (31) *via* a first spring coupling (40) for moving the sliding plate.

4. A magnetic-tape apparatus as claimed in Claim 3, characterized in that the servo wheel (41) is elastically coupled to the pressure-roller lever (32) *via* a second spring coupling (59), which second spring coupling at least at the end of the movement of the sliding plate towards the end position exerts a force on the pressure-roller lever to press the pressure roller (34) against a capstan (16) of the apparatus.

5. A magnetic-tape apparatus as claimed in Claim 4, characterized in that the servo wheel (41) carries bell-crank lever (58) which cooperates with the second spring coupling (59).

6. A magnetic-tape apparatus as claimed in any of Claims 3 to 5, characterized in that the servo wheel (41) has an aperture (41a) through which one of the winding spindles (12, 13) passes.

7. A magnetic-tape apparatus as claimed in any one of the preceding Claims, characterized in that *via* a coupling between the pressure-roller lever (32) and a normal-mode idler wheel (15b) the second control means also control said idler wheel to drive one of the winding spindles (12, 13).

8. A magnetic tape apparatus as claimed in any one of the preceding Claims, characterized in that the apparatus comprises a cassette holder (80) for moving a cassette containing a magnetic tape (84) towards and away from the winding spindles (12, 13) and the sliding plate (31) carries latching means which control a latching member (79) for latching the cassette holder, the control of said latching means causing the cassette holder to be unlatched in the initial position of the sliding plate.

9. A magnetic-tape apparatus as claimed in any of the preceding Claims, characterized in that the sliding plate (31) carries brake means (93) which are operable to lock the winding spindles (12, 13) at least in the initial position of the sliding plate.

10. A magnetic-tape apparatus as claimed in any one of the Claims 2 to 9, characterized in that the positioning means comprise two projections (31d) on that wall of the sliding plate which faces the drum assembly (3), which projections are cooperable with at least one recess (77) in the drum assembly.

11. A magnetic tape apparatus as claimed in any of the preceding Claims, characterized in that the first control means comprise two guide surfaces (69, 70) on the sliding plate (31), which guide surfaces each comprise a curved end portion (69a, 70a) adjoining a straight guide portion (69b, 70b).

12. A magnetic-tape apparatus as claimed in Claim 11, characterized in that the curved end portion (69a, 70a) is elastically deflexible relative to the sliding plate (31).

13. A magnetic-tape apparatus as claimed in any of the preceding Claims, characterized in that the second control means comprise a V-shaped groove (60) in that side of the sliding plate (31) which is remote from the deck (1).

14. A magnetic-tape apparatus as claimed in any of the preceding Claims, characterized in that the third control means comprise a control groove (31a) in that side of the sliding plate (31) which is adjacent the deck (1) in which groove is guided a pin (28a) which is coupled to the idler wheel (15b).

15. A magnetic tape apparatus as claimed in any of Claims 9 to 14, characterized in that the tape guides, the positioning means, the first control means, the second control means, the third control means, the latching means and the brake means are constructed to form an integral unit with the sliding plate.

16. A magnetic-tape apparatus as claimed in any of Claims 3 to 15, characterized in that the servo wheel (41) can be driven by the drive means (8) of the drum assembly *via* an engageable and disengageable idler-wheel system.

17. A magnetic-tape apparatus as claimed in Claim 16, characterized in that one wheel (53) of the idler-wheel system cooperates with a position-detection element (57) for detecting the position of the sliding plate (31) relative to the drum assembly (3).

18. A magnetic-tape apparatus as claimed in any of the preceding Claims, characterized in that the sliding plate carries friction means (90a, 90b) which are pressed against one of the winding spindles (12, 13) in the end position of the sliding plate (31).

19. A magnetic tape apparatus as claimed in Claim 18, characterized in that the sliding plate (31) can be positioned in a first or a second fast-wind position between the initial position and the end position, in which respective fast-wind positions the sliding plate is situated at different distances from the drum assembly (3), and the friction means comprise two felt elements (90a, 90b) which are attached to the sliding plate (31), the respective felt element being pressed against one winding spindle (12, 13) or the other in the first fast-wind position and the second fast-wind position respectively.

**Patentansprüche**

1. Magnetbandgerät mit einem Gestell (1), das ein zylinderförmiges Trommelsystem (3) trägt, das mit mindestens einem drehbaren Magnetkopf (7) versehen ist, wobei auf dem Gestell eine Schiebeplatte (31) mit mindestens zwei in einem Abstand voneinander liegenden Bandführungselementen (73 bis 76) geradlinig zu und von dem Trommelsystem geführt wird, wobei diese Anordnung derart ist, daß wenn eine Bandkassette in das Gerät eingeführt wird, eine Bewegung der Schiebeplatte (31) aus einer Ausgangslage in Richtung des Trommelsystems (3) dafür sorgt, daß ein Teil des in der Kassette vorhandenen Magnetbandes (84) in Richtung des Trommelsystems geführt wird, wobei nach dieser Bewegung, wenn die Schiebeplatte sich in einer Endlage befindet, der genannte Teil des Magnetbandes durch die Bandführungselemente um einen Teil des Umfangs des Trommelsystems (3) geschlungen wird, wobei das Gestell (1) ebenfalls zwei in einem Abstand voneinander liegende Wickelspindeln (12, 13) aufweist zum Auf- bzw. Abwickeln des Magnetbandes (84) in der Kassette, dadurch gekennzeichnet, daß die Schiebeplatte mit den nachfolgenden Teilen versehen ist:

Positionierungsmitteln (31d), die in der Endlage der Schiebeplatte die Bandführungselemente (73 bis 76) gegenüber dem Trommelsystem (3) positionieren,

erste Steuermittel (69, 70), die zwei auf dem Gestell angeordnete und Bandführungselemente (65, 66) aufweisende Schwenkarme (62b, 63b) steuern,

zweite Steuermittel (60), die einen auf dem Gestell (1) angeordneten und eine Bandanpreßrolle (34) aufweisenden Bandanpreßrollenhebel (32) steuert und

dritte Mittel (31a), die ein Zwischenrad (36) zum Antreiben einer der Wickelspindeln (12, 13) steuern.

2. Magnetbandgerät nach Anspruch 1, dadurch gekennzeichnet, daß die Schiebeplatte (31) in der Ausgangslage wenigstens teilweise in dem Gebietszwischen den zwei Wickelspindeln (12, 13) liegt und auf der dem Trommelsystem (3) zugewandten Vorderseite eine konkav gekrümmte Wand (31c) aufweist, wobei die Mitte der Krümmung in der Endlage der Schiebeplatte im wesentlichen auf der Achse des Trommelsystems liegt.

3. Magnetbandgerät nach Anspruch 2, dadurch gekennzeichnet, daß in dem Gebiet zwischen den zwei Wickelspindeln (12, 13) eine Lagerung eines Servo-Rades (41) liegt, das über eine erste Federkupplung (40) zum Bewegen der Schiebeplatte mit derselben elastisch gekuppelt ist.

4. Magnetbandgerät nach Anspruch 3, dadurch gekennzeichnet, daß das Servo-Rad (41) über eine zweite Federkupplung (59) mit dem Bandanpreßrollenhebel (32) elastisch gekuppelt ist, wobei diese zweite Federkupplung wenigstens am Ende der Bewegung der Schiebeplatte in Richtung der Endlage auf den Bandanpreßrollenhebel eine Kraft ausübt um die Bandanpreßrolle (34) gegen eine Bandantriebswelle (16) des Gerätes zu drükken.

5. Magnetbandgerät nach Anspruch 4, dadurch gekennzeichnet, daß das Servo-Rad (41) einen zweischenkligen Hebel (58) aufweist, der mit der zweiten Federkupplung (59) zusammenarbeitet.

6. Magnetbandgerät nach einem der Ansprüche 3 bis 5, dadurch gekennzeichnet, daß das Servo-Rad (41) eine Öffnung (41a) aufweist, durch die sich eine der Wickelspindeln (12, 13) erstreckt.

7. Magnetbandgerät nach einem der vorstehenden Ansprüche, dadurch gekennzeichnet, daß über eine Kupplung zwischen dem Bandanpreßrollenhebel (32) und einem Spielrad (15b) die zweiten Steuermittel ebenfalls das genannte Spielrad zum Abtreiben der Wickelspindeln (12, 13) steuern.

8. Magnetbandgerät nach einem der vorstehenden Ansprüche, dadurch gekennzeichnet, daß das Gerät eine Kassettenhaltung (80) aufweist zum Verschieben einer Kassette mit einem Magnetband (84) zu den Wickelspindeln (12, 13) hin und weg von denselben, und daß die Schiebeplatte (31) Verriegelungsmittel aufweist, die ein Verriegelungselement (79) zum Verriegeln der Kassetenhalterung steuern, wobei die Steuerung der genannten Verriegelungsmittel dafür sorgt, daß die Kassettenhaltung in der Ausgangslage der Schiebeplatte entriegelt ist.

9. Magnetbandgerät nach einem der vorstehenden Ansprüche, dadurch gekennzeichnet, daß die Schiebeplatte (31) Bremsmittel (83) aufweist, welche die Wickelspindeln (12, 13) wenigstens in der Ausgangslage der Schiebeplatte verriegeln.

10. Magnetbandgerät nach einem der vorstehenden Ansprüche 2 bis 9, dadurch gekennzeichnet, daß die Positionierungsmittel an der dem Trommelsystem (13) zugewandten Wand der Schiebeplatte, zwei Vorsprünge (31d) aufweisen, die mit wenigstens einer Ausnehmung (77) in dem Trommelsystem zusammenarbeiten.

11. Magnetbandgerät nach einem der vorstehenden Ansprüche, dadurch gekennzeichnet, daß die ersten Steuermittel auf der Schiebeplatte (31) zwei Führungsflächen (69, 70) aufweisen, die je einen an einen geraden Führungsteil (69b, 70b) grenzenden gekrümmten Endteil (69a, 70a) aufweisen.

12. Magnetbandgerät nach Anspruch 11, dadurch gekennzeichnet, daß der gekrümmte Endteil (69a, 70a) gegenüber der Schiebeplatte (31) elastisch beweglich ist.

13. Magnetbandgerät nach einem der vorstehenden Ansprüche, dadurch gekennzeichnet, daß die zweiten Steuermittel in der von dem Gestell (1) abgewandten Seite der Schiebeplatte (31), eine V-förmige Rille (60) aufweisen.

14. Magnetbandgerät nach einem der vorstehenden Ansprüche, dadurch gekennzeichnet, daß die dritte Steuermittel in der dem Gestell (1) zugewandten Seite der Schiebeplatte (31), eine Steuerrille (31a) aufweisen, in der ein mit dem Zwischenrad (15b) gekuppelter Stift (28a) geführt ist.

15. Magnetbandgerät nach einem der vorstehenden Ansprüche 9 bis 14, dadurch gekennzeichnet, daß die Bandführungselemente, die Positionierungsmittel, die ersten Steuermittel, die zweiten Steuermittel, die dritten Steuermittel, die Verriegelungsmittel und die Bremmsmittel derart ausgebildet sind, daß sie mit der Schiebeplatte eine Einheit bilden.

16. Magnetbandgerät nach einem der vorstehenden Ansprüche 3 bis 15, dadurch gekennzeichnet, daß das Servo-Rad (41) über ein ein- und auskuppelbares Zwischenradsystem von den Antriebsmittel (8) des Trommelsystems angetrieben werden kann.

17. Magnetbandgerät nach Anspruch 16, dadurch gekennzeichnet, daß ein Rad (53) des Zwischenradsystems mit einem Lagendetektionselement (57) zusammenarbeitet zum Detektieren der Lage der Schiebeplatte (31) gegenüber dem Trommelsystem (3).

18. Magnetbandgerät nach einem der vorstehenden Ansprüche, dadurch gekennzeichnet, daß die Schiebeplatte Reibemittel (90a, 90b) aufweist, die in der Endlage der Schiebeplatte (31) gegen eine der Wickelspindeln (12, 13) gedrückt werden.

19. Magnetbandgerät nach Anspruch 18, dadurch gekennzeichnet, daß die Schiebeplatte (31) zwischen der Ausgangs- und Endlage in eine erste oder zweite Schnellvorlauflage gebracht werden kann, wobei die Schiebeplatte in den betreffenden Lagen in unterschiedlichen Abständen von dem Trommelsystem (3) liegt, und daß die Reibemittel zwei an der Schiebeplatte (31) befestigte Filzteile (90a, 90b) aufweisen, wobei in der ersten bzw. zweiten Schnellvorlauflage der eine bzw. der andere Filzteil gegen die eine bzw. die andere Wickelspindel (12, 13) gedrückt wird.

**Revendications**

1. Appareil à bande magnétique comprenant une platine (1) portant un ensemble de tambours cylindriques (3) pourvu au moins d'une tête magnétique tournante (7), une plaque coulissante (31) portant au moins deux guides de bande (73 à 76) espacés l'un de l'autre étant guidée sur la platine de manière à se déplacer en ligne droite vers l'ensemble de tambours et depuis celui-ci, l'agencement étant tel que, lorsqu'une cassette de bande est positionnée dans ou sur l'appareil, un déplacement de la plaque coulissante (31) depuis une position initiale en direction de l'ensemble de tambours (3) provoque l'amenée d'une partie de la bande magnétique (84) de la cassette vers l'ensemble de tambours, après quoi, lorsque la plaque coulissante se trouve dans une position d'extrémité, ladite partie de la bande magnétique est appliquée autour d'une partie de la circonférence de l'ensemble de tambours (3) par les guides de bande, la platine (1) portant également deux mandrins de bobinage (12, 13) qui sont espacés l'un de l'autre et qui sont destinés respectivement à bobiner et à débobiner la bande magnétique (84) de la cassette, caractérisé en ce que la plaque coulissante (31) comprend:

des moyens positionneurs (31d) qui positionnent les guides de bande (73 à 76) par rapport à l'ensemble de tambours (3) dans la position d'extrémité de la plaque coulissante;

des premiers moyens de commande (69) 70) qui commandent deux bras pivotants (62b, 63b) qui sont disposés sur la platine et qui portent des guides de bande (65, 66);

des deuxièmes moyens de commande (60) qui commandent un levier à galet presseur (32) qui est disposé sur la platine (1) et qui porte un galet presseur (34), et

des troisièmes moyens de commande (31a) qui commandent une roue folle (26) afin d'entraîner un des mandrins de bobinage (12, 13).

2. Appareil à bande magnétique suivant la revendication 1, caractérisé en ce que, dans la position initiale, la plaque coulissante (31) est au moins partiellement située dans la zone comprise entre les deux mandrins de bobinage (12, 13) et, à sa face antérieure qui est tournée vers l'ensemble de tambours (3), la plaque coulissante comprend und paroi courbe concave (31c), dont le centre de courbure, dans la position d'extrémité de la plaque coulissante, est en substance située sur l'axe de l'ensemble de tambours.

3. Appareil à bande magnétique suivant la revendication 2, caractérisé en ce qu'un palier d'une roue d'asservissement (41) est situé dans la zone comprise entre les deux mandrins de bobinage (12, 13), cette roue d'asservissement étant couplée élastiquement à la plaque coulissante (31) par l'intermédiaire d'un premier accouplement à ressort (40) afin de déplacer la plaque coulissante.

4. Appareil à bande magnétique suivant la revendication 3, caractérisé en ce que la roue d'asservissement (41) est couplée élastiquement au levier à galet presseur (32) par l'intermédiaire d'un second accouplement à ressort (59) qui, au moins à l'extrémité de la course de la plaque coulissante en direction de la position d'extrémité, exerce une force sur le levier à galet presseur pour presser le galet presseur (34) contre un cabestand (16) de l'appareil.

5. Appareil à bande magnétique suivant la revendication 4, caractérisé en ce que la roue d'asservissement (41) porte un levier coudé (58) qui coopère avec le second accouplement à ressort (59).

6. Appareil à bande magnétique suivant l'une quelconque des revendications 3 à 5, caractérisé en ce que la roue d'asservissement (41) présente une ouverture (41a) traversée par un des mandrins de bobinage (12, 13).

7. Appareil à bande magnétique suivant l'une quelconque des revendications précédentes, caractérisé en ce que, par l'intermédiaire d'un accouplement entre le levier à galet presseur (32) et une roue folle de mode normal (15b), les deuxièmes moyens de commande commandent également la roue folle pour entraîner un des mandrins de bobinage (12, 13).

8. Appareil à bande magnétique suivant l'une quelconque des revendications précédentes, caractérisé en ce qu'il comprend un porte-cassette (80) destiné à déplacer une cassette contenant une bande magnétique (84) vers les mandrins de bobinage (12, 13) et à partir de ceux-ci, et la plaque coulissante (31) porte des moyens de verrouillage qui commandent un organe de verrouillage (79) pour verrouiller le porte-cassette, la commande des moyens de verrouillage provoquant le déverrouillage du porte-cassette dans la position initiale de la plaque coulissante.

9. Appareil à bande magnétique suivant l'une quelconque des revendications précédentes, caractérisé en ce que la plaque coulissante (31) porte des moyens de freinage (83) qui peuvent être actionnés pour bloquer les mandrins de bobinage (12, 13) au moins dans la position initiale de la plaque coulissante.

10. Appareil à bande magnétique suivant l'une quelconque des revendications 2 à 9, caractérisé en ce que les moyens positionneurs comprennent deux saillies (31d) sur la paroi de la plaque coulissante qui est tournée vers l'ensemble de tambours (3), ces saillies pouvant coopérer avec au moins un évidement (77) dans l'ensemble de tambours.

11. Appareil à bande magnétique suivant l'une quelconque des revendications précédentes, caractérisé en ce que les premiers moyens de commande comprennent deux surfaces de guidage (69, 70) sur la plaque coulissante (31), ces surfaces de guidage comprenant chacune une partie d'extrémité courbe (69a, 70a) adjacente à une partie de guidage droite (69b, 70b).

12. Appareil à bande magnétique suivant la revendication 11, caractérisé en ce que la partie d'extrémité courbe (69a, 70a) est élastiquement flexible par rapport à la plaque coulissante (31).

13. Appareil à bande magnétique suivant l'une quelconque des revendications précédentes, caractérisé en ce que les deuxièmes moyens de commande comprennent une rainure en V (60) dans le côté de la plaque coulissante (31) qui est éloigné de la platine (1).

14. Appareil à bande magnétique suivant l'une quelconque des revendications précédentes, caractérisé en ce que les troisièmes moyens de commande comprennent une rainure de commande (31a) dans le côté de la plaque coulissante (31) qui est adjacent à la platine (1) et dans cette rainure est guidé un doigt (28a) qui est couplé à la roue folle (15b).

15. Appareil à bande magnétique suivant l'une quelconque des revendications 9 à 14, caractérisé en ce que les guides de bande, les moyens positionneurs, les premiers moyens de commande, les deuxièmes moyens de commande, les troisièmes moyens de commande, les moyens de verrouillage et les moyens de freinage sont construits de manière à former un tout avec la plaque coulissante.

16. Appareil à bande magnétique suivant l'une quelconque des revendications 3 à 15, caractérisé en ce que la roue d'asservissement (41) peut être entraînée par le dispositif d'entraînement (8) de l'ensemble de tambours par l'intermédiaire d'un système à roues folles pouvant être engagé et dégagé.

17. Appareil à bande magnétique suivant la revendication 16, caractérisé en ce qu'une roue (53) du système à roues folles coopère avec un élément de détection de position (57) afin de détecter la position de la plaque coulissante (31) par rapport à l'ensemble de tambours (3).

18. Appareil à bande magnétique suivant l'une quelconque des revendications précédentes, caractérisé en ce que la plaque coulissante porte des moyens de friction (90a, 90b) qui sont pressés, contre un des mandrins de bobinage (12, 13), dans la position d'extrémité de la plaque coulissante (31).

19. Appareil à bande magnétique suivant la revendication 18, caractérisé en ce que la plaque coulissante (31) peut être positionnée dans une première ou une seconde position de bobinage rapide entre la position initiale et la position d'extrémité, et, dans ces positions de bobinage rapide, la plaque coulissante est située à des distances différentes de l'ensemble de tambours (3), et les moyens de friction comprennent deux éléments en feutre (90a, 90b) qui sont attachés à la plaque coulissante (31), l'élément en feutre respectif étant pressé contre un mandrin de bobinage (12, 13) ou l'autre respectivement dans la première et dans la seconde position de bobinage rapide.

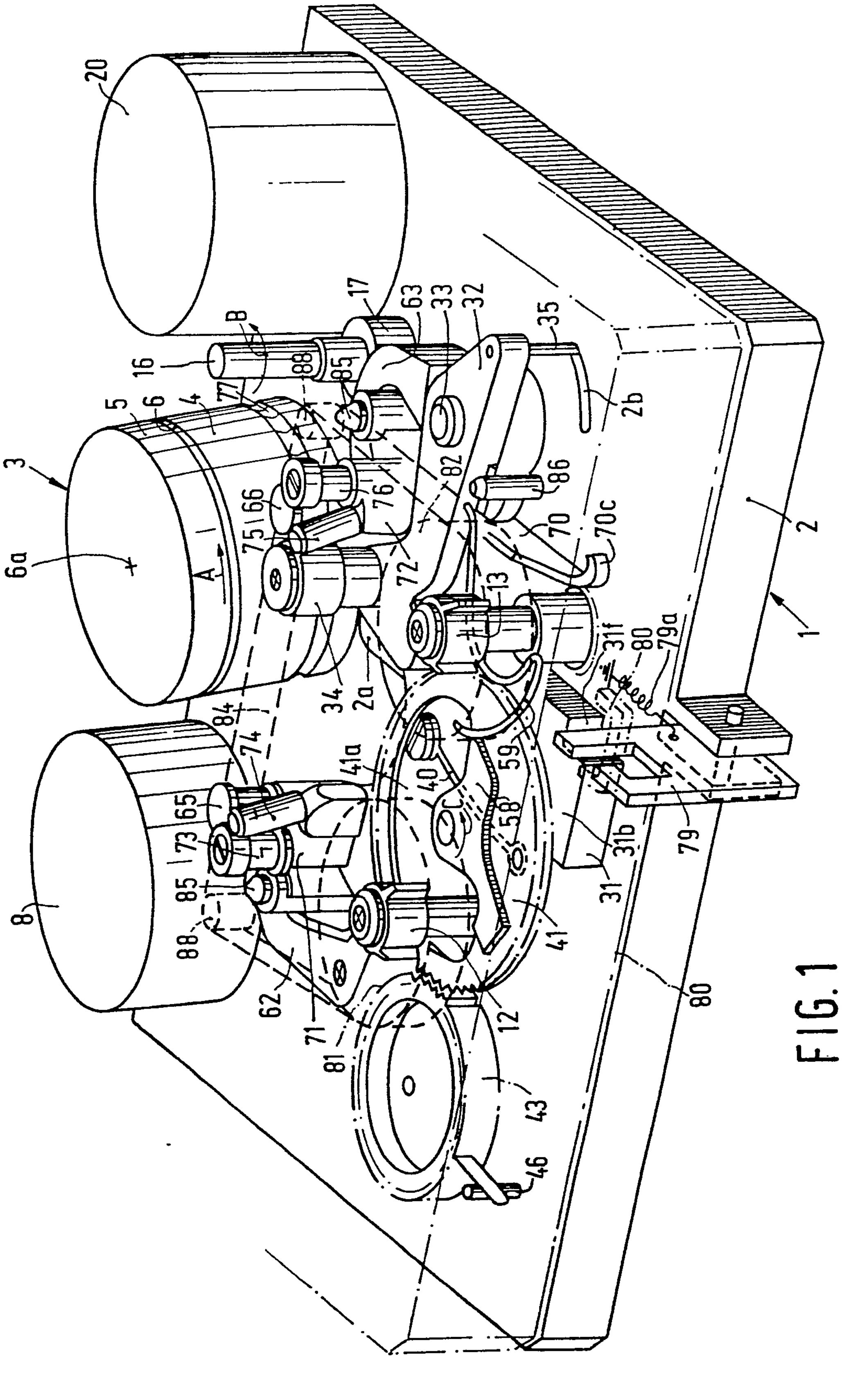

FIG. 1

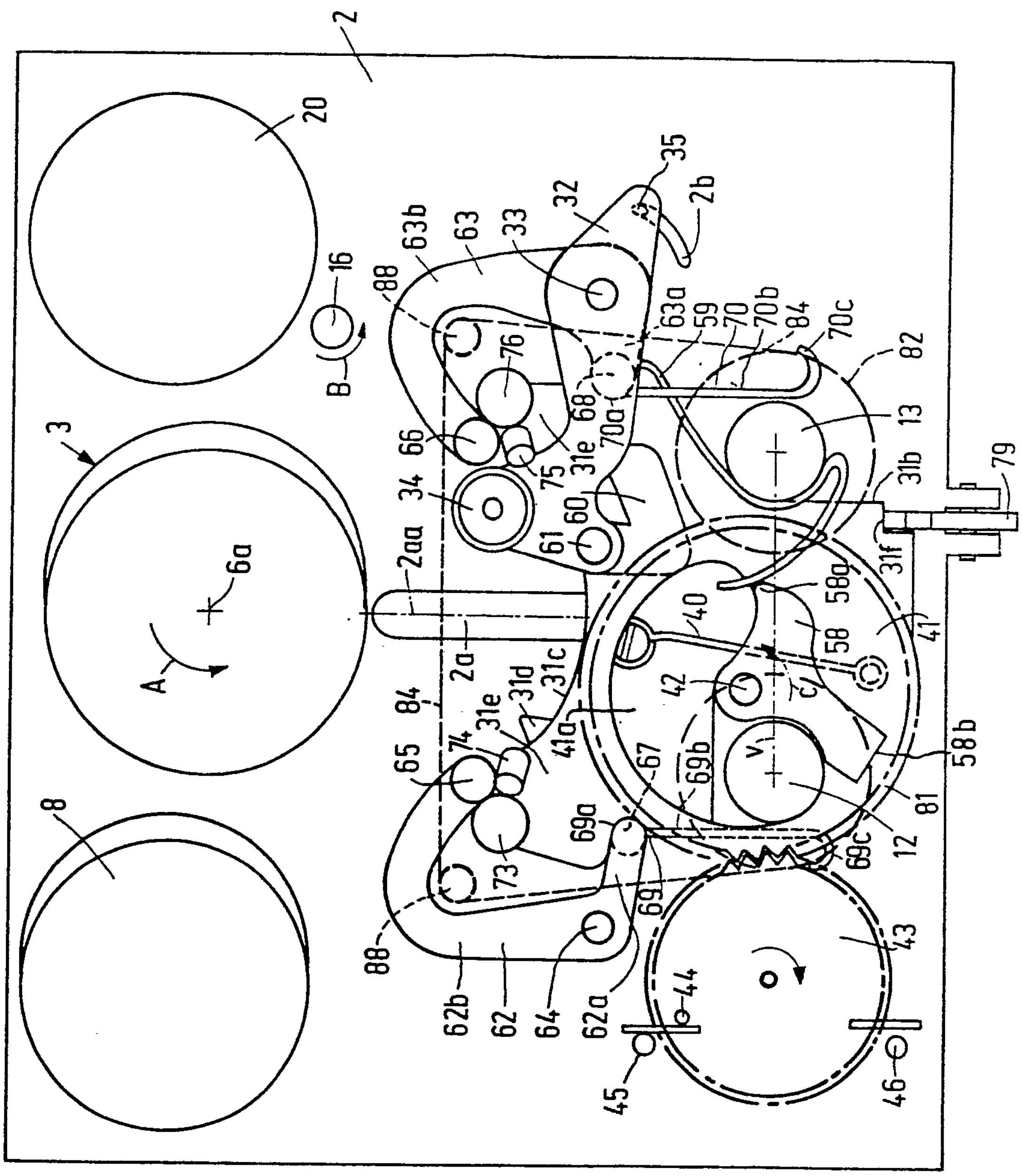
2
20
3
6a
A
8
16
B
32
33
35
2b
63b
63
88
76
66
75
31e
68
70a
63a
59
70
70b
84
70c
82
13
34
60
61
2aa
2a
31b
79
31f
40
58a
58
41
42
C
31c
31d
74
65
41a
67
69b
69a
73
69c
12
81
58b
88
62b
62
64
62a
69
43
44
45
46

FIG.2

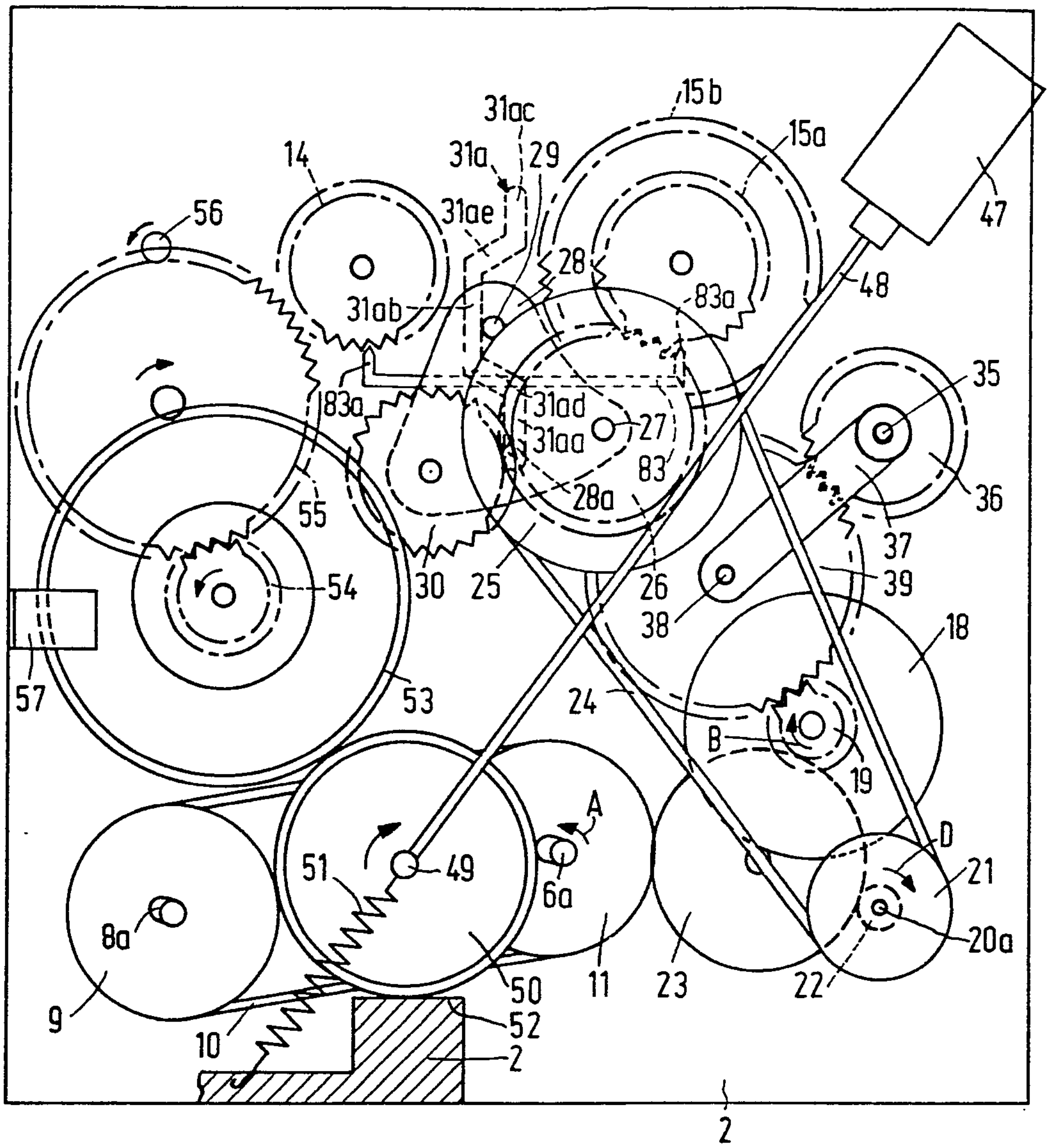
15b
15a
31ac
31a
29
14
31ae
56
47
28
83a
48
31ab
35
83a
31ad
27
31aa
36
83
28a
37
55
54
30
25
26
39
38
18
57
53
24
B
19
D
A
21
51
49
6a
20a
8a
50
11
23
22
52
9
10
2
2

FIG. 3

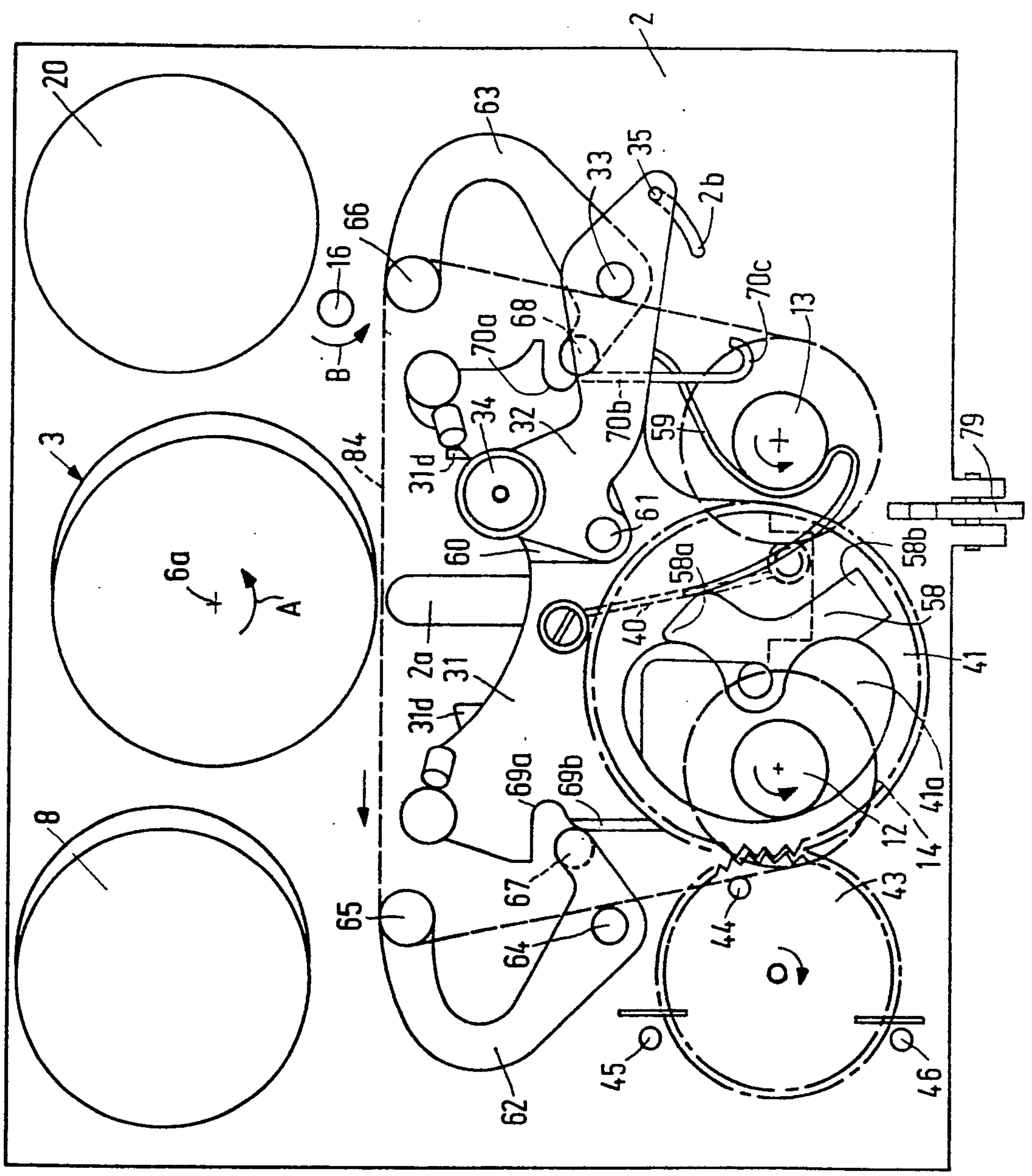
2
20
63
35
33
2b
66
16
B
68
70a
70c
13
70b
59
3
84
34
31d
32
61
79
6a
A
60
58b
58a
2a
40
31
58
41
31d
69a
69b
12
41a
14
8
67
43
65
64
44
45
46
62

FIG.4

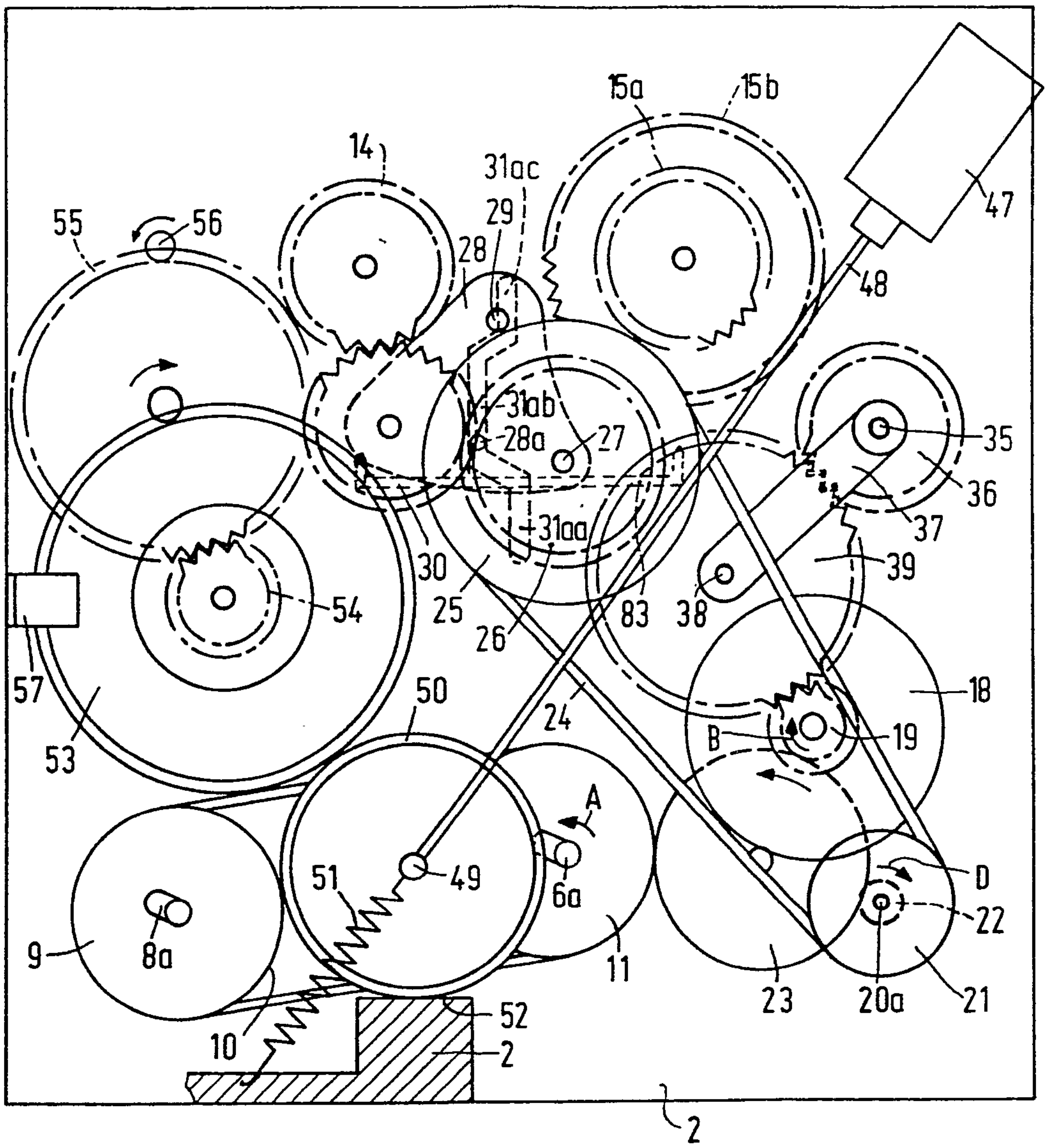
15a
15b
14
31ac
29
28
55
56
47
48
35
36
37
31ab
28a
27
30
31aa
39
38
83
25
26
54
57
53
50
24
18
19
B
A
D
51
49
6a
22
9
8a
11
23
20a
21
52
10
2
2

FIG.5

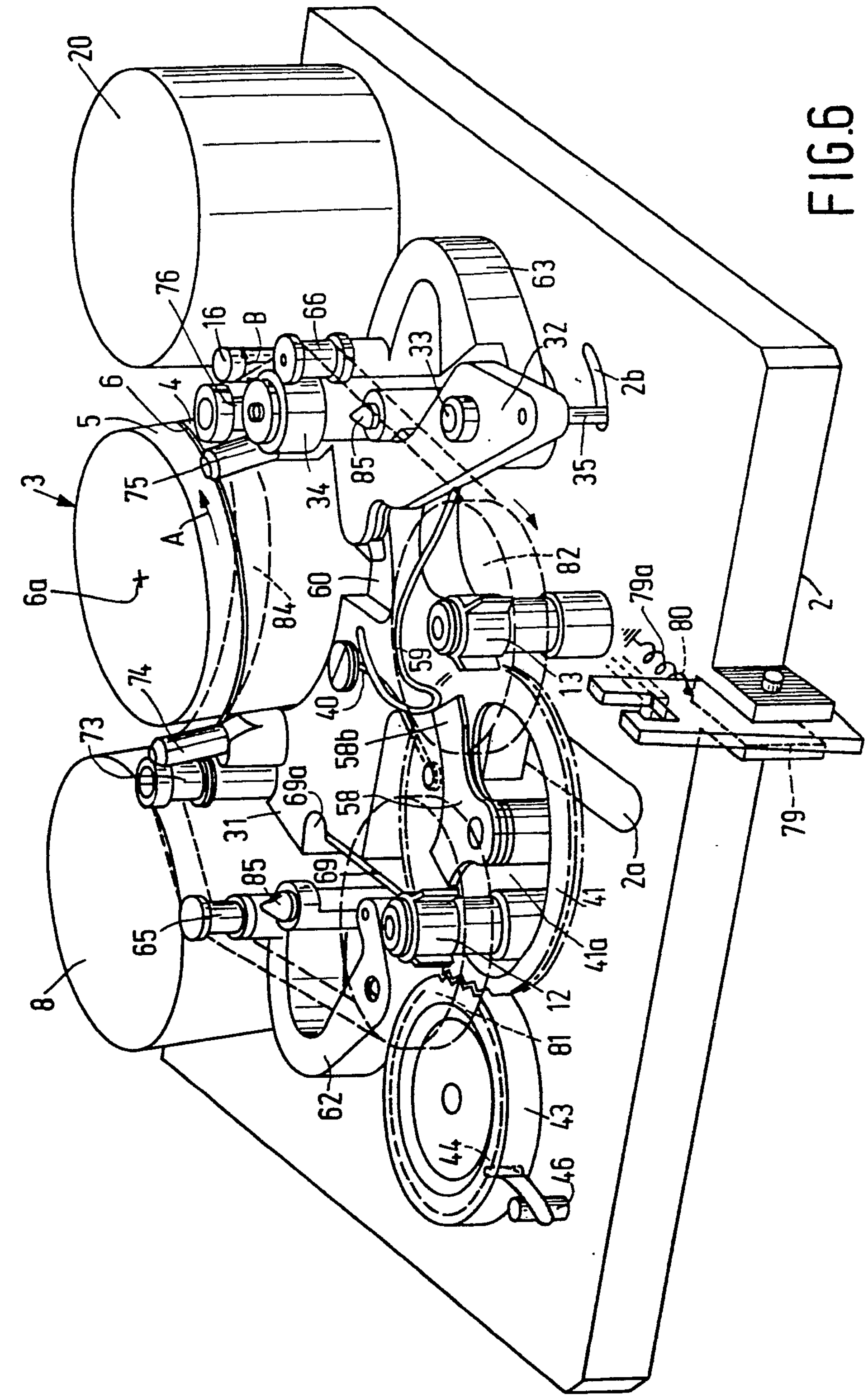
20
76
16
B
66
63
6
4
5
3
75
85
33
32
2b
34
35
A
6a
84
60
82
79a
80
2
74
40
59
13
73
58b
69a
31
58
85
69
65
41
41a
2a
79
8
12
81
62
43
44
46

FIG.6

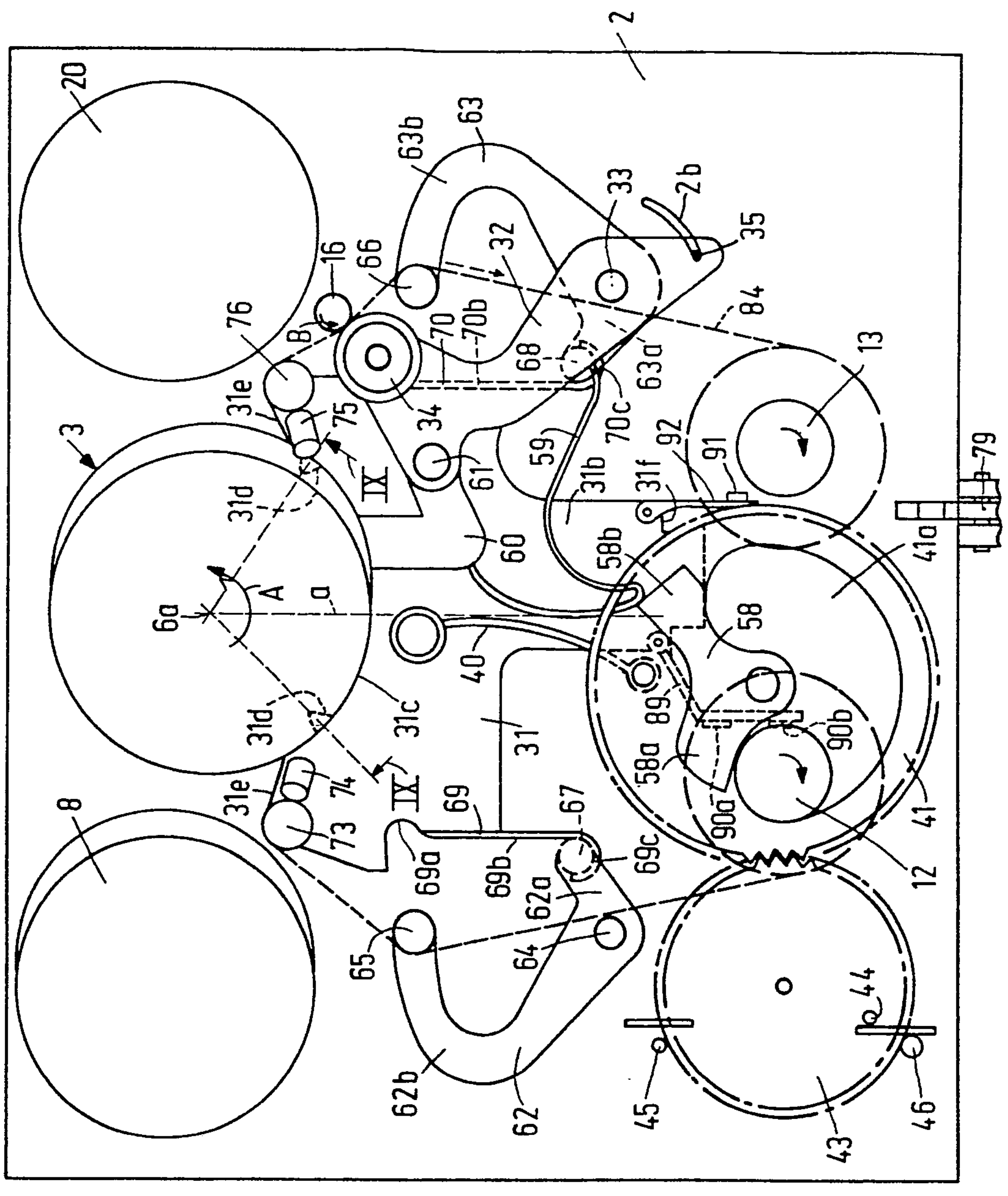

FIG.7

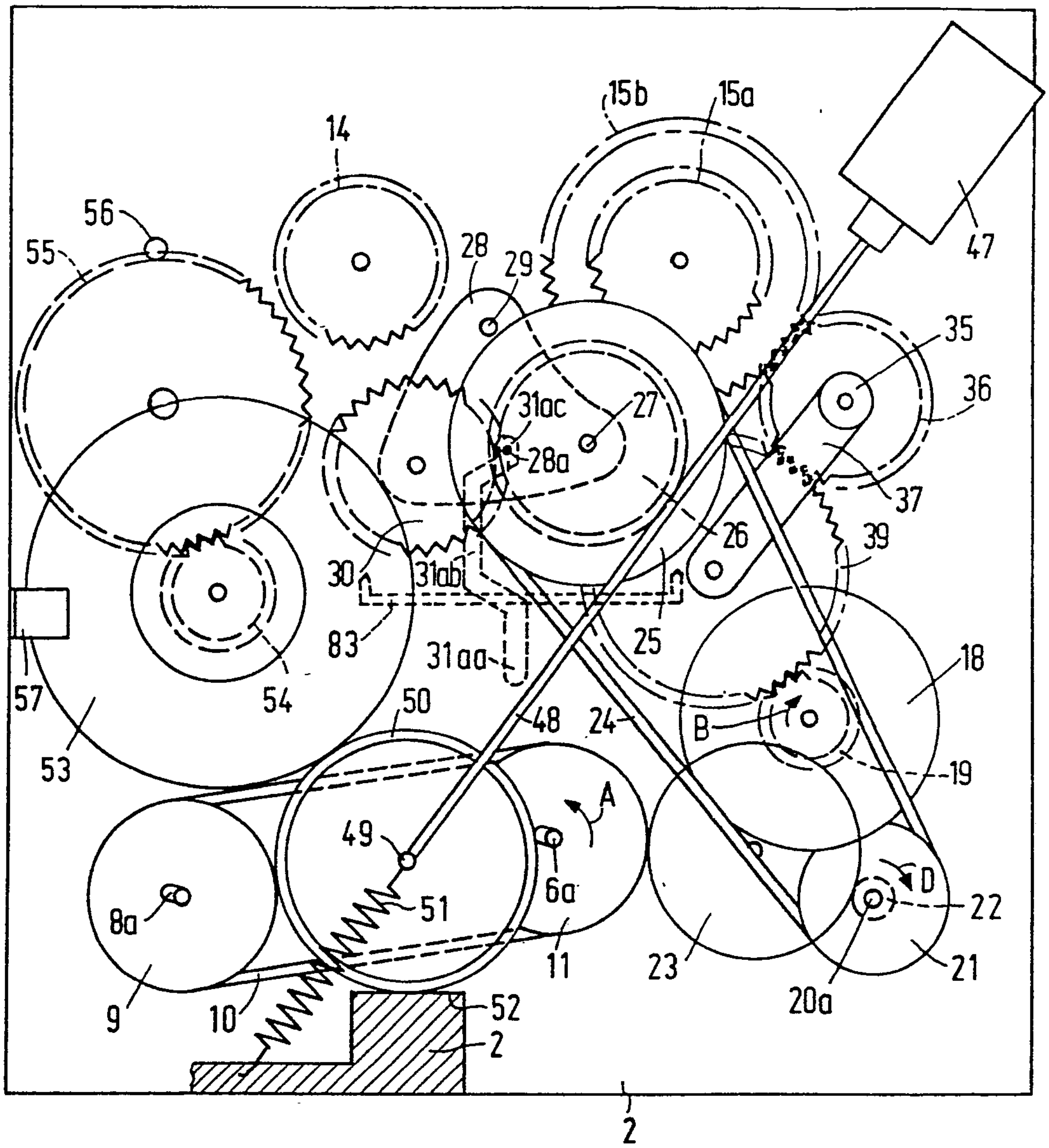

14
15b
15a
56
55
28
29
47
35
36
31ac
27
28a
37
26
39
30
31ab
25
83
31aa
57
54
50
48
24
18
B
19
53
A
49
6a
D
8a
51
22
11
23
21
9
10
52
2
20a
2


FIG.8

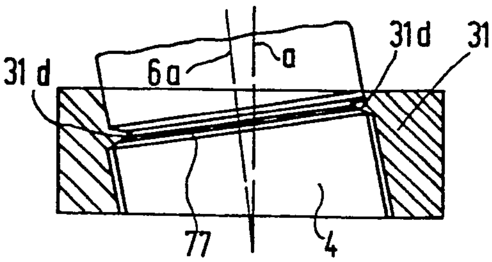


FIG. 9

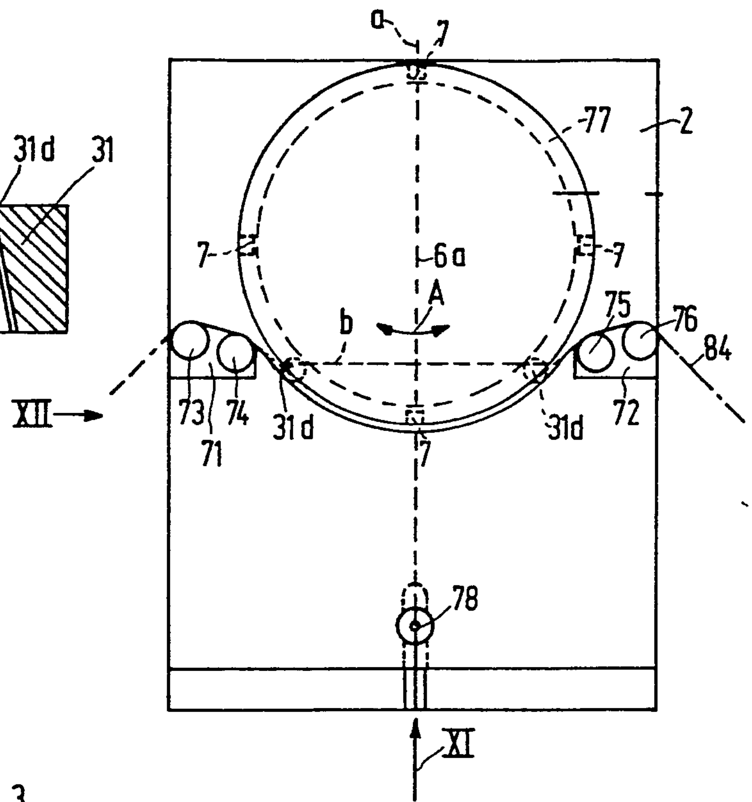


FIG. 10

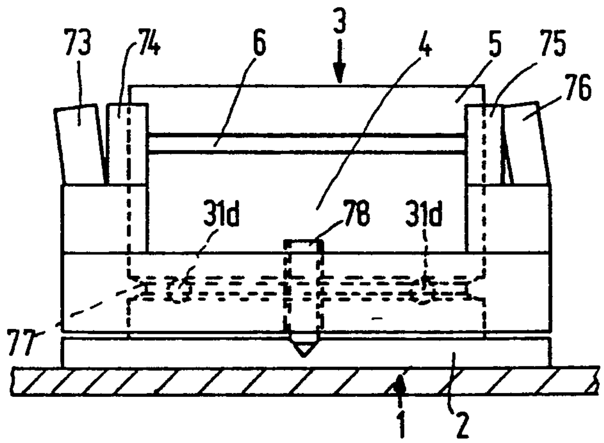


FIG. 11

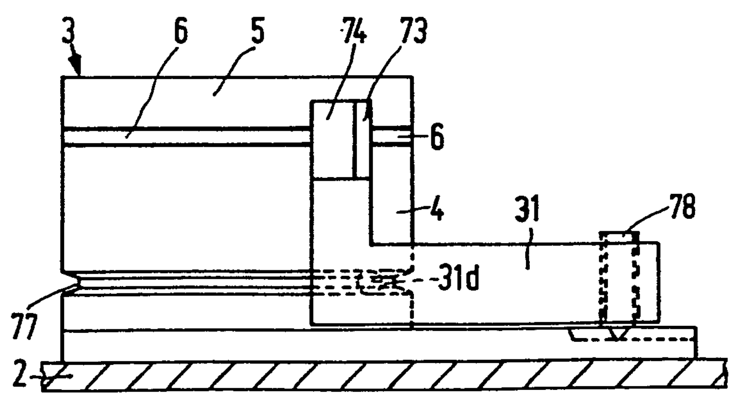


FIG. 12